(19) Europäisches Patentamt
European Patent Office
Office européen des brevets

(11) Numéro de publication : **0 315 514 B1**

(12) # FASCICULE DE BREVET EUROPEEN

(45) Date de publication du fascicule du brevet : **29.04.92 Bulletin 92/18**

(51) Int. Cl.$^5$ : **C08G 73/02,** H01B 1/12

(21) Numéro de dépôt : **88402728.5**

(22) Date de dépôt : **28.10.88**

(54) **Procédé de fabrication d'un film de polyaniline, film obtenu par ce procédé et générateur électrochimique utilisant ce film.**

(30) Priorité : **03.11.87 FR 8715215**

(43) Date de publication de la demande : **10.05.89 Bulletin 89/19**

(45) Mention de la délivrance du brevet : **29.04.92 Bulletin 92/18**

(84) Etats contractants désignés : **CH DE GB IT LI**

(56) Documents cités : **FR-A- 2 545 494**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Genies, Eugène Rue Troussai F-38120 Saint Egreve (FR)**
Inventeur : **Hany, Pascal 222, rue Jolivet F-37000 Tours (FR)**
Inventeur : **Penneau, Jean-François 725, rue Robert Amy F-49400 Saumur (FR)**
Inventeur : **Santier, Christian 14 Avenue de l'Europe F-38120 Saint Egreve (FR)**

(74) Mandataire : **Mongrédien, André et al c/o BREVATOME 25, rue de Ponthieu F-75008 Paris (FR)**

**EP 0 315 514 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé de fabrication d'un film de polyaniline utilisable dans un grand nombre de domaines compte tenu de ses propriétés conductrices électroniques. Ces films de polyaniline sont parfaitement bien adaptés pour constituer une matière active d'électrode plus spécialement positive d'un générateur électrochimique ou batterie.

En particulier, le procédé selon l'invention permet la réalisation de films de polyaniline auto-supportés permettant la réalisation de générateurs électrochimiques extra-plats de format type "carte de crédit".

Outre cette application spécifique, les films de polyaniline de l'invention peuvent être utilisés comme matière active d'électrode et/ou couche électrochrome dans un dispositif d'affichage électrochrome, comme matériaux de blindage électromagnétique ou électrostatique, comme convertisseurs photovoltaïques, comme matériaux d'électrodes spécifiques et de façon plus générale dans tous les domaines techniques employant des matériaux polymériques conducteurs électroniques.

Par polyanilines, on entend généralement les polymères provenant de la condensation de l'aniline elle-même mais aussi de celle de ses dérivés dont notamment le dimère, l'amino-paradiphénylamine.

Les polyanilines se préparent généralement par oxydation chimique ou électrochimique de l'aniline ou de ses dérivés dans un milieu acide. Le milieu acide est d'une grande importance pour obtenir un polymère de haut poids moléculaire et contenant peu de défauts de structures. Ce procédé de fabrication des polyanilines est notamment décrit dans le document FR-A-2 545 494 et dans le document US-A-4 629 540 déposés au nom du demandeur.

Quel que soit le milieu acide utilisé pour l'oxydation chimique ou électrochimique de l'aniline et de ses dérivés, il n'est actuellement pas possible d'obtenir des films auto-supportés, c'est-à-dire des films ne nécessitant pas de support. Or, il se trouve que les films auto-supportés sont d'une grande importance pratique pour un grand nombre d'applications et notamment pour la réalisation de nouveaux générateurs électrochimiques extra-plats.

En outre, lors de l'oxydation de l'aniline et éventuellement de certains de ses dérivés, il y a toujours un risque d'obtenir de la benzidine, qui est un produit toxique et notamment très cancérigène, de formule :

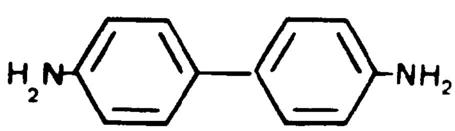

Aussi, toute amélioration dans la préparation de film de polyaniline par oxydation électrochimique de l'aniline et de ses dérivés est très intéressante.

La présente invention a justement pour objet un procédé de fabrication de polyanilines par oxydation électrochimique de l'aniline et de ses dérivés permettant la réalisation de film de polyanilines auto-supportés. En outre, ces films renferment moins d'une partie par million de benzidine.

De façon plus précise, l'invention a pour objet un procédé de fabrication d'un film de polyaniline consistant à oxyder électrochimiquement à l'aide d'une anode et d'une cathode un composé choisi parmi l'aniline et ses dérivés à l'exception de la benzidine, dans un milieu acide, en présence de cations d'au moins un métal de transition, cette oxydation conduisant à la formation sur l'anode d'un film de polyaniline renfermant lesdits cations ; à laver l'anode recouverte dudit film et à séparer le film lavé, de l'anode.

Le procédé d'oxydation par voie électrochimique selon l'invention permet l'obtention d'un film de polyaniline, contrairement à l'oxydation par voie chimique, utilisable tel quel (sans autre traitement) comme matière active d'électrode. En particulier, il n'est plus nécessaire d'utiliser du noir de carbone ou tout autre additif conducteur avec la polyaniline formée, ce qui fait gagner au moins 20% sur le poids de la masse totale de la matière active d'électrode. En outre, la voie électrochimique est beaucoup plus simple que la voie chimique, cette dernière nécessitant généralement une étape de préparation spéciale de l'oxydant.

L'oxydation électrochimique peut durer plusieurs heures avec une densité de courant allant de 0,1 à 150 mA/cm$^2$. En outre, il est possible de recharger le milieu liquide en aniline ou en ses dérivés, plusieurs fois, sans dégradation importante du milieu électrolytique.

La présence de ces cations de métaux de transition est très importante. En effet, lorsqu'ils sont en solution, l'introduction de l'aniline dans ce milieu ou de ses dérivés, conduit à la formation de complexes. Les molécules de monomère ne sont alors plus libres dans la solution, mais sont regroupées en agrégats autour des cations des métaux de transition. Le nombre de molécules d'aniline ou de ses dérivés complexées dépend du nombre de coordinations du ou des cations métalliques utilisés.

Bien que l'aniline et ses dérivés ne sont que des bases faibles et que les complexes formés avec les cations de métaux de transition ont généralement des constantes de stabilité relativement faibles et que l'aniline et ses dérivés ne sont pas toujours en mesure de saturer la coordination maximale du métal utilisé, il n'en reste pas moins que ces complexes existent et qu'ils favorisent la solubilisation de ces métaux dans le milieu acide et conduisent à des polyanilines de morphologie différente de celles obtenues en l'absence de ces cations.

En effet, lorsque l'aniline et ses dérivés sont oxydés en l'absence de métaux de transition, les molécules se présentent seules à l'électrode sous une certaine configuration, avec probablement l'atome d'azote dirigé vers l'électrode. En revanche, lorsque ces métaux de transition sont présents, l'aniline ou ses dérivés arrive à l'électrode sous forme d'un complexe contenant un cation métallique et plusieurs molécules de monomère. Le mécanisme réactionnel est donc modifié et il n'y a pratiquement plus de polymérisation "queue à queue" correspondant, pour l'aniline et pour la formation du dimère, à la réaction chimique suivante :

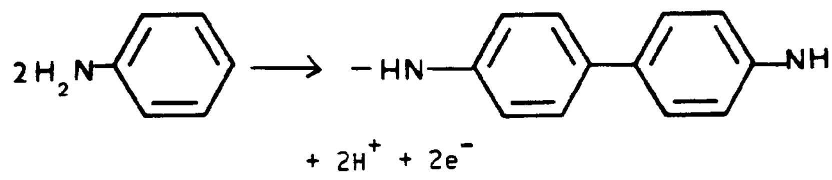

qui favorise la formation de la benzidine mais une polymérisation "tête à queue" correspondant à la réaction de formation du dimère :

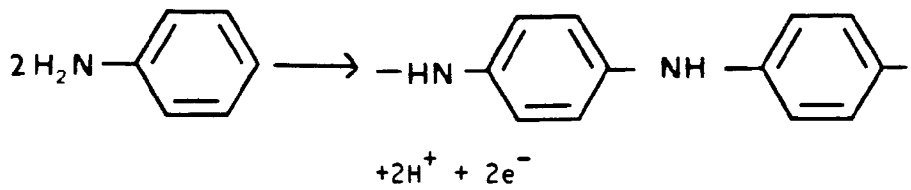

qui conduit à une amélioration du rendement et diminue de manière presque totale la formation de benzidine.

Les produits obtenus par le procédé selon l'invention contiennent des éléments de transition dont la quantité est fonction du nombre de lavages effectués après la formation des polyanilines. La présence de ces éléments de transition ne constitue pas un dopage, dans le sens où il n'y a pas d'incorporation de ces cations dans la chaîne carbonée des polyanilines, mais plutôt complexation suivie d'une polymérisation puis libération partielle des cations complexés au moment des lavages.

On comprend ainsi que la morphologie des polymères obtenus par le procédé de l'invention soit différente de celle obtenue par les procédés selon l'art antérieur.

L'amélioration du rendement de préparation des polyanilines grâce au procédé selon l'invention peut se constater de la manière suivante. Après la synthèse du polymère, ce dernier est lavé abondamment en particulier à l'eau et à l'acétonitrile grâce à un extracteur de Soxhlet.

En l'absence de cations métalliques, les solutions de lavage sont fortement colorées par des produits secondaires, dont la benzidine, ou par des oligomères de bas poids moléculaire. En revanche, lorsque des métaux de transition sont utilisés, les solutions de lavage restent parfaitement claires pour l'eau et très légèrement colorées pour l'acétonitrile.

En effet, la très forte diminution de la concentration de ces produits secondaires et/ou oligomères de bas poids moléculaire, voire même leur disparition complète, a pu être confirmée par l'analyse en chromatographie liquide haute pression des solutions de lavage et par l'étude des masses moléculaires des polymères, par chromatographie de perméation de gels. Par ailleurs, on constate que les rendements du procédé selon l'invention sont proches de la théorie.

Le procédé selon l'invention s'applique à tous les monomères satisfaisant à la formule générale (1) :

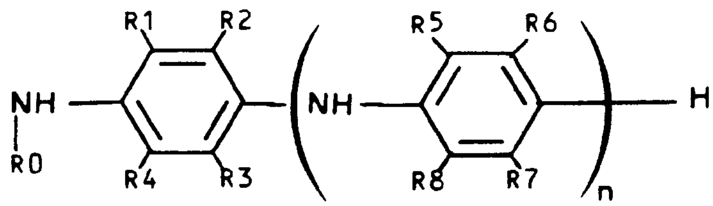

dans laquelle n est un nombre valant 0 ou 1 et R0, R1, R2, R3, R4, R5, R6, R7 et R8 qui peuvent être identiques ou différents représentent (a) un atome d'hydrogène, (b) un atome d'halogène, (c) un groupement choisi parmi OH, $NO_2$, $NH_2$, $CF_3$, $SO_2$, CN, SCN, OCN, SR, OR,

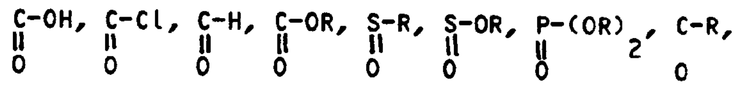

avec R un radical alkyle, linéaire ou ramifié ou un radical aryle, ou (d) un radical choisi parmi les radicaux alkyle linéaires ou ramifiés et aryle, comportant éventuellement un ou plusieurs substituants choisis dans le groupe comprenant OH, $NO_2$, $NH_2$, $CF_3$, $SO_2$, CN, Cl, F, SCN, OCN, SR, OR,

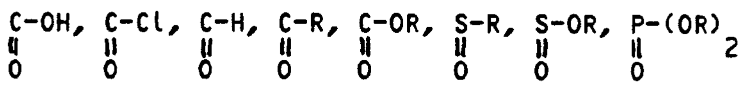

où R est un radical alkyle, linéaire ou ramifié ou un radical aryle.

Lorsque R0-R8 représentent individuellement des radicaux alkyle linéaires ou ramifiés, substitués ou non, le nombre de carbone de la chaîne carbonée varie de 1 à 100.

Lorsque R0-R8 représentent individuellement des radicaux aryle ces derniers peuvent être les radicaux phényle, naphtyle, anthracényle ou phénanthryle.

Le radical alkyle ou aryle R ci-dessus peut comprendre de 1 à 30 atomes de carbone.

Comme halogène constituant R0-R8, on peut citer le fluore, le brome, le chlore.

De préférence, le dérivés de l'aniline auxquels s'appliquent l'invention, sont la para-aminodiphénylamine, les toluidines, les aminophénols, les carboxyanilines, les mésidines.

Selon l'invention, l'oxydation chimique est réalisée en milieu acide et en particulier dans un milieu contenant un ou plusieurs acides dont l'équivalent pH est égal ou inférieur à 0 par rapport à l'eau. Comme acide utilisable, on peut citer l'acide sulfurique, l'acide orthophosphorique, l'acide fluorhydrique, l'acide benzène sulfonique, l'acide chlorhydrique, l'acide tétrafluoroborique, l'acide hexafluorophosphorique, l'acide fluoro ou chlorosulfurique, l'acide perchlorique, l'acide bromhydrique, etc.

De préférence, l'oxydation se fait dans un milieu acide riche en fluorure. En effet, la présence de fluorure permet d'obtenir des polymères stables, proches de la stoechiométrie. Comme milieu acide riche en fluorure, on peut citer les mélanges $R'NH_2$ ; HF avec R' représentant un radical alkyle ayant de 1 à 10 atomes de carbone ; des mélanges de pyridine ; HF ; ou des mélanges $NH_4F$, $\alpha$ HF avec $\alpha$ allant de 1 à 4. En particulier $\alpha$ vaut 2,35 ce qui correspond à l'eutectique $NH_3$-HF. Ce mélange sera appelé ci-après bain "N".

Les métaux de transition utilisables dans l'invention sont les métaux dont le numéro atomique est compris dans l'intervalle allant de 21 à 48 ainsi que le mercure. De préférence, on utilise le nickel, le cuivre, le cobalt, le fer, le manganèse, l'argent.

Les cations des métaux de transition sont introduits en particulier sous forme d'un ou plusieurs sels de l'un des métaux de transition, sous forme de sels mixtes de deux ou plusieurs métaux de transition ou sous forme de mélange de sels des métaux de transition. En particulier, les sels des métaux de transition sont ajoutés sous forme de fluorure dans la solution.

Afin que les cations métalliques selon l'invention forment des complexes avec l'aniline ou ses dérivés, empêchant ainsi la formation de benzidine, il faut que la concentration dans le milieu acide de ces cations soit au moins égale à $10^{-4}$ mole/litre, cette dernière pouvant aller jusqu'à 1 mole/litre.

Les sels utilisés ne sont pas nécessairement des sels solubles dans la solution acides, pris isolément, leur solubilisation étant notamment due à la présence de l'aniline ou de ses dérivés dans le milieu liquide.

L'anode utilisée pour la réaction électrochimique peut être réalisée en un matériau attaquable ou inattaquable par le milieu acide.

Lorsque l'anode est réalisée en un matériau inattaquable par le milieu acide, et en particulier en platine, en or ou en carbone, les cations des métaux de transition doivent nécessairement être introduits sous forme de sels.

En revanche, lorsque l'anode est réalisée en un matériau corrodable pas trop rapidement par le milieu acide, il est nécessaire de réaliser cette dernière en l'un des métaux de transition selon l'invention, permettant la formation d'un film de polyaniline auto-supporté, ou en un alliage de l'un au moins de ces métaux. En particulier, l'anode peut être réalisée en un acier inoxydable.

Même en présence d'une anode corrodable par le milieu acide, il est posible d'ajouter au milieu liquide des sels des métaux de transition conformes à l'invention.

Pendant l'oxydation électrochimique, la cathode peut être réalisée en un matériau inattaquable par la solution acide ou bien en un matériau attaquable par cette dernière. Dans ce dernier cas, la cathode est avantageusement réalisée en un des métaux de transition selon l'invention.

L'invention a aussi pour objet des films de polyaniline auto-supportés obtenus par le procédé selon l'invention. Ces films de polyaniline peuvent présenter une épaisseur allant de 100 nm à 10 mm.

Afin d'augmenter la conductivité électrique de ces films, il est avantageux de les doper après lavage avec des électrolytes tels que l'acide perchlorique ou l'acide tétrafluoroborique en solution dans l'eau (de 0,01 à 1 mole par litre). En vue de leur utilisation, dans un générateur électrochimique, le dopage de ces films doit être tel que la conductivité électrique maximale soit comprise entre 0,1 et 100 $ohms^{-1}.cm^{-1}$.

La souplesse et la tenue mécanique des films obtenus selon l'invention est largement suffisante pour une mise en oeuvre du polymère sous forme d'un enroulement ou d'un pliage. Toutefois, il est préférable que le film de polyaniline reste légèrement solvaté par un solvant aqueux ou organique tel que l'eau, le carbonate de propylène ou d'éthylène, le dioxolane, le diméthoxyéthane, le tétrahydrofuranne, le méthyl tétrahydrofuranne, ...

En effet, on constate que si le polymère est chauffé sous vide pour le déshydrater, il devient cassant.

L'analyse centésimale, l'analyse par résonance paramagnétique électronique ou aux rayons X permettent de montrer que le polymère obtenu par le procédé selon l'invention contient toujours les cations métalliques qui ont été utilisés pour sa préparation.

L'invention a encore pour objet un générateur électrochimique comportant dans une enveloppe étanche, une matière active négative d'électrode et une matière active positive d'électrode en contact avec un électrolyte, caractérisé en ce que la matière active positive est formée d'un film de polyaniline selon l'invention. Ce générateur est un générateur extra-plat du type carte de crédit.

La matière active négative d'électrode peut être formée d'un métal réactif tel que le lithium, d'un alliage de lithium tel qu'un alliage de lithium et d'aluminium, d'un polymère conjugué conducteur, de carbone ou d'un matériau composite. De préférence, on utilise comme matière active négative le lithium ou les alliages de lithium et d'aluminium.

Les électrolytes associés à des électrodes à base de lithium sont de préférence des sels de lithium tels que le fluorure, le chlorure, le perchlorate, le perborate, le persulfate ou l'hexafluorophosphate. Néanmoins, on peut employer d'autres électrolytes tels que l'hexafluorophosphate de sodium, le tétrafluoroborate ou le triflate de lithium ($CF_3SO_3Li$), le chlorure ou le fluorure de tétraméthylammonium.

Ces électrolytes sont en particulier dissous dans un solvant organique comme par exemple les éthers linéaires tels que le diméthoxyéthane, les éthers cycliques comme par exemple le dioxolane ou les méthylhydrofuranes, ou des esters tels que le carbonate de propylène ou d'éthylène.

D'autres caractéristiques et avantages de l'invention ressortiront mieux de la description qui va suivre, donnée à titre illustratif et non limitatif en référence aux figures annexées, dans lesquelles :

– la figure 1 représente schématiquement, en vue éclatée, un générateur électrochimique comportant, comme matière active d'électrode, un film de polyaniline selon l'invention,

– les figures 2, 4 et 5 représentent schématiquement différents types de générateurs électrochimiques conformes à l'invention, et

– la figure 3 donne différentes courbes de charge et de décharge du générateur électrochimique représenté sur la figure 1, donnant la tension V en volt, appliquée ou délivrée par la générateur en fonction de la charge Q en coulomb.

A titre d'exemple, on donne ci-après, la fabrication selon l'invention d'un film auto-supporté de polyaniline ainsi que son utilisation comme matière active d'électrode d'un générateur électrochimique extra-plat.

Une solution électrolytique est préparée à partir de 200 ml de bain "N" additionné de 15 ml d'aniline. L'anode est constituée d'une plaque d'inox de 10/10 cm parfaitement polie et encadrée par deux cathodes également en inox et distantes d'environ 0,7 cm de l'anode.

L'électrolyse est conduite pendant 4 heures. Le potentiel entre les électrodes est contrôlé pour des valeurs maximum ne dépassant pas respectivement, pour la tension et le courant, 2 V et 1 A.

Au bout de quatre heures, 12 453 coulombs ont été utilisés.

L'anode est alors enlevée du dispositif d'électrolyse puis lavée à l'eau distillée. Le film est soigneusement décollé de l'anode avec un scalpel, puis est lavé abondamment à l'eau et à l'acétonitrile. Ce film a une épaisseur moyenne de l'ordre du mm et pèse 4,5 g.

Avant d'être utilisé dans un générateur électrochimique, le film est dopé par trempage dans une solution aqueuse d'acide perchlorique à pH 0, pendant 5 jours, lavé de nouveau à l'acétonitrile, séché puis imprégné sous vide d'une solution de carbonate de propylène à 1 mol/l de perchlorate de lithium.

Dans ce film dont les dimensions sont voisines de 9/9 cm, on découpe une plaque de 4 par 7 cm. Cette plaque est montée dans un générateur électrochimique tel que représenté sur la figure 1, en vue éclatée.

Ce générateur comprend, dans une enveloppe étanche et isolante, se présentant sous forme de deux feuilles de polyester 1 et 3 scellées par leur bord, de 0,2 mm environ d'épaisseur, une feuille de papier 5 imprégnée d'une solution molaire de $LiClO_4$ dissous dans du carbonate de propylène, servant d'électrolyte.

Cette feuille 5 servant de séparateur pour éviter tout court-circuit est intercalée entre la plaque de polyaniline 8 obtenue précédemment, en contact avec une feuille d'aluminium 7 de 2 micromètres d'épaisseur, et une feuille de lithium 9 de 1 micromètre d'épaisseur, déposée sur une feuille d'aluminium 11 de 2 micromètres d'épaisseur.

La plaque de polyaniline 8 constitue la matière active d'électrode positive du générateur et est pourvue d'une patte 13 constituant la borne + du générateur. La feuille de lithium 9 constitue la matière active d'électrode négative du générateur et la feuille d'aluminium 11 un collecteur de courant. Ce dernier est pourvu d'une patte 15 constituant la borne - du générateur.

Ce générateur se présente sous la forme d'une carte type carte de crédit 16, comme schématisée sur la figure 2, de 4x7 cm de surface et 3 mm d'épaisseur. Il a été soumis à des cycles de charge-décharge tels que représentés sur la figure 3.

Les courbes 17, 19 et 21 de décharge sont obtenues respectivement aux 19, 20 et 21ième cycles de charge-décharge du générateur et les courbes 23 et 25 de charge sont obtenues respectivement aux 19 et 20ième cycles de charge-décharge. On constate à l'examen de ces courbes que la capacité de la batterie augmente en cyclage jusqu'au trentième cycle environ et reste constante ensuite, et que le rendement des nombres de coulombs est excellent (rapport décharge/charge).

Avec le générateur représenté sur les figures 1 et 2, on a obtenu pour l'électrode positive 8 une capacité massique voisine de 100 Ah/kg et une énergie massique de 300 Wh/kg. Pour le générateur total, on obtient une énergie massique de 20 Wh/kg. Il ne s'agit pour le moment que d'un modèle de générateur, mais il doit être possible d'améliorer grandement cette énergie massique par une technologie appropriée, pour atteindre des ordres de grandeur de 30 à 40 Wh/kg et peut-être plus, pour une batterie de cette taille.

Etant donné la souplesse et la tenue mécanique du film de polyaniline obtenu, il est possible de réaliser le générateur de la figure 1 sous forme d'un film continu de 50 mm de large et de 15 cm de long, plié 27 tel que représenté sur la figure 4, les plis ayant une longueur de 3 cm ou encore enroulé 29 tel que représenté sur la figure 5.

## Revendications

1. Procédé de fabrication d'un film de polyaniline, consistant à oxyder électrochimiquement à l'aide d'une anode et d'une cathode un composé choisi parmi l'aniline et ses dérivés, à l'exception de la benzidine, dans un milieu acide, en présence de cations d'au moins un métal de transition, cette oxydation conduisant à la formation sur l'anode d'un film de polyaniline renfermant lesdits cations ; à laver l'anode recouverte dudit film et à séparer le film lavé, de l'anode.

2. Procédé de fabrication selon la revendication 1, caractérisé en ce que le métal de transition est un métal présentant un numéro atomique allant de 21 à 48 ou le mercure.

3. Procédé de fabrication selon la revendication 1 ou 2, caractérisé en ce que le métal est choisi parmi le nickel, le cuivre, le cobalt, le fer, le manganèse et l'argent.

4. Procédé de fabrication selon l'une quelconque des revendications 1 à 3, caractérisé en ce que le métal est utilisé sous forme d'un alliage.

5. Procédé de fabrication selon l'une quelconque des revendications 1 à 3, caractérisé en ce que les cations sont introduits dans le milieu acide sous forme de sel.

6. Procédé de fabrication selon l'une quelconque des revendications 1 à 5, caractérisé en ce que l'anode contient lesdits cations.

7. Procédé de fabrication selon l'une quelconque des revendications 1 à 6, caractérisé en ce que la concentration des cations dans le milieu est choisie dans l'intervalle allant de $10^{-4}$ à 1 mole/litre.

8. Procédé de fabrication selon l'une quelconque des revendications 1 à 7, caractérisé en ce que le milieu acide est un milieu dont le pH est égal ou inférieur à 0.

9. Procédé de fabrication selon l'une quelconque des revendications 1 à 8, caractérisé en ce que le milieu acide est un milieu riche en fluorure.

10. Procédé de fabrication selon l'une quelconque des revendications 1 à 9, caractérisé en ce que le milieu acide est formé du mélange eutectique $NH_4F$ ; 2,35 HF.

11. Film de polyaniline obtenu par le procédé selon l'une quelconque des revendications 1 à 10, caractérisé en ce qu'il est auto-supporté et contient des cations d'au moins un métal de transition.

12. Film de polyaniline obtenu par le procédé selon l'une quelconque des revendications 1 à 10, caractérisé en ce qu'il contient moins de 1 partie par million de benzidine.

13. Film de polyaniline selon la revendication 11 ou 12, caractérisé en ce qu'il présente une épaisseur allant de 100 nm à 10 mm.

14. Film de polyaniline selon l'une quelconque des revendications 11 à 13, caractérisé en ce qu'il est dopé avec de l'acide perchlorique ou de l'acide tétrafluoroborique.

15. Film de polyaniline selon l'une quelconque des revendications 11 à 14, caractérisé en ce qu'il présente une conductivité allant de 0,1 à 100 $ohms^{-1}.cm^{-1}$.

16. Film de polyaniline selon l'une quelconque des revendications 11 à 15, caractérisé en ce qu'il est imprégné d'un solvant aqueux ou organique.

17. Générateur électrochimique comportant dans une enveloppe étanche (1, 3) une matière active négative d'électrode (9) et une matière active positive d'électrode (8) en contact avec un électrolyte, caractérisé en ce que la matière active positive (8) est formée d'un film de polyaniline selon l'une quelconque des revendications 11 à 16.

18. Générateur électrochimique selon la revendication 17, caractérisé en ce que la matière active négative (9) se présente sous la forme d'un film de lithium ou d'un alliage de lithium et d'aluminium.

19. Générateur électrochimique selon la revendication 18, caractérisé en ce qu'il se présente sous la forme d'un film (16, 27, 29) éventuellement enroulé ou plié.

20. Générateur électrochimique selon l'une quelconque des revendications 17 à 19, caractérisé en ce que les matières actives négative et positive sont séparées l'une de l'autre par un séparateur en film (5) imprégné dudit électrolyte.

21. Générateur électrochimique selon l'une quelconque des revendications 17 à 20, caractérisé en ce qu'il se présente sous forme d'une carte de crédit.

## Patentansprüche

1. Verfahren zur Herstellung eines Polyanilinfilms, bestehend aus dem elektrochemischen Oxydieren einer aus Anilin und seinen Derivaten mit Ausnahme von Benzidin ausgewählten Verbindung in einem sauren Medium mittels einer Anode und einer Kathode in Gegenwart von Kationen wenigstens eines Übergangsmetalls, wobei diese Oxydation auf der Anode zur Bildung eines Polyanilinfilms führt, welcher die besagten Kationen einschließt, dem Waschen der mit besagtem Film überzogenen Anode und dem Ablösen des gewaschenen Films von der Anode.

2. Herstellungsverfahren gemäß Anspruch 1, dadurch gekennzeichnet, daß das Übergangsmetall ein Metall ist, welches eine Atomnummer von 21 bis 48 aufweist oder Quecksilber ist.

3. Herstellungsverfahren gemäß Anspruch 1 oder 2, dadurch gekennzeichnet, daß das Metall aus Nickel, Kupfer, Kobalt, Eisen, Mangan und Silber ausgewählt ist.

4. Herstellungsverfahren gemäß einem der Ansprüche 1 bis 3, dadurch gekennzeichnet, daß das Metall in Form einer Legierung verwendet wird.

5. Herstellungsverfahren gemäß einem der Ansprüche 1 bis 3, dadurch gekennzeichnet, daß die Kationen in das saure Medium in Form eines Salzes eingebracht werden.

6. Herstellungsverfahren gemäß einem der Ansprüche 1 bis 5, dadurch gekennzeichnet, daß die Anode die besagten Kationen enthält.

7. Herstellungsverfahren gemäß einem der Ansprüche 1 bis 6, dadurch gekennzeichnet, daß die Konzentration des Kations in dem Medium in dem Bereich von $10^{-4}$ bis 1 Mol/Liter gewählt wird.

8. Herstellungsverfahren gemäß einem der Ansprüche 1 bis 7, dadurch gekennzeichnet, daß das saure Medium ein Medium ist, dessen pH gleich oder kleiner als 0 ist.

9. Herstellungsverfahren gemäß einem der Ansprüche 1 bis 8, dadurch gekennzeichnet, daß das saure Medium ein fluorhaltiges Medium ist.

10. Herstellungsverfahren gemäß einem der Ansprüche 1 bis 9, dadurch gekennzeichnet, daß das saure

Medium aus einem eutektischen Gemisch $NH_4F$; 2,35 HF gebildet wird.

11. Nach dem Verfahren gemäß einem der Ansprüche 1 bis 10 erhaltener Polyanilinfilm, dadurch gekennzeichnet, daß er selbsttragend ist und Kationen mindestens eines Übergangsmetalls enthält.

12. Nach dem Verfahren gemäß einem der Ansprüche 1 bis 10 erhaltener Polyanilinfilm, dadurch gekennzeichnet, daß er weniger als 1 Teil Benzidin auf 1 Million enthält.

13. Polyanilinfilm gemäß Anspruch 11 oder 12, dadurch gekennzeichnet, daß er eine Dicke von 100 nm bis 10 mm aufweist.

14. Polyanilinfilm gemäß einem der Ansprüche 11 bis 13, dadurch gekennzeichnet, daß er mit Perchlorsäure oder Tetrafluorborsäure gedopt ist.

15. Polyanilinfilm gemäß einem der Ansprüche 11 bis 14, dadurch gekennzeichnet, daß er eine Leitfähigkeit von 0,1 bis 100 $Ohm^{-1}.cm^{-1}$ aufweist.

16. Polyanilinfilm gemäß einem der Ansprüche 11 bis 15, dadurch gekennzeichnet, daß er mit einem wäßrigen oder organischen Lösungsmittel getränkt ist.

17. Elektrochemischer Generator, welcher in einem undurchlässigen Gehäuse (1, 3) ein aktives Negativ-Elektrodenmaterial (9) und ein aktives Positiv-Elektrodenmaterial (8) in Kontakt mit einem Elektrolyten beinhaltet, dadurch gekennzeichnet, daß das aktive Positiv-Material von einem Polyanilinfilm gemäß einem der Ansprüche 11 bis 16 gebildet wird.

18. Elektrochemischer Generator gemäß Anspruch 17, dadurch gekennzeichnet, daß das aktive Negativ-Material (9) in Form eines Films aus Lithium oder einer Legierung aus Lithium und Aluminium vorliegt.

19. Elektrochemischer Generator gemäß Anspruch 18, dadurch gekennzeichnet, daß er in der Form eines gegebenenfalls gewickelten oder gefalteten Films (16, 27, 29) vorliegt.

20. Elektrochemischer Generator gemäß einem der Ansprüche 17 bis 19, dadurch gekennzeichnet, daß die aktiven Negativ- und Positiv-Materialien durch einen mit besagtem Elektrolyten getränkten Trennfilm voneinander getrennt sind.

21. Elektrochemischer Generator gemäß einem der Ansprüche 17 bis 21, dadurch gekennzeichnet, daß er in Form einer Kreditkarte vorliegt.

## Claims

1. Process for the production of a polyaniline film consisting of electrochemically oxidizing with the aid of an anode and a cathode a compound chosen from among aniline and its derivatives, with the exception of benzidine, in an acid medium, in the presence of cations of at least one transition metal, said oxidation leading to the formation on the anode of a polyaniline film containing said cations, washing the film-covered anode and separating the washed film from the anode.

2. Production process according to claim 1, characterized in that the transition metal is a metal having an atomic number between 21 and 48, or mercury.

3. Production process according to claims 1 or 2, characterized in that the metal is chosen from among nickel, copper, cobalt, iron, manganese and silver.

4. Production process according to any one of the claims 1 to 3, characterized in that the metal is used in the form of an alloy.

5. Production process according to any one of the claim 1 to 3, characterized in that the cations are introduced into the acid medium in the form of salt.

6. Production process according to any one of the claims 1 to 5, characterized in that the anode contains said cations.

7. Production process according to any one of the claims 1 to 6, characterized in that the concentration of the cations in the medium is chosen in the range from $10^{-4}$ to 1 mole/litre.

8. Production process according to any one of the claims 1 to 7, characterized in that the acid medium has a pH equal to or below zero.

9. Production process according to any one of the claims 1 to 8, characterized in that the acid medium is a fluoride-rich medium.

10. Production process according to any one of the claims 1 to 9, characterized in that the acid medium is formed from the eutectic mixture $NH_4F$, 2.35 HF.

11. Polyaniline film obtained by the process according to any one of the claims 1 to 10, characterized in that it is self-supported and contains cations of at least one transition metal.

12. Polyaniline film obtained by the process according to any on of the claims 1 to 10, characterized in that it contains less than 1 part per million of benzidine.

13. Polyaniline film according to claims 11 or 12, characterized in that it has a thickness between 100 nm

and 10 mm.

14. Polyaniline film according to any one of the claims 11 to 13, characterized in that it is doped with perchloric or tetrafluoroboric acid.

15. Polyaniline film according to any one of the claims 11 to 14, characterized in that it has a conductivity between 0.1 and 100 $ohms^{-1}.cm^{-1}$.

16. Polyaniline film according to any one of the claims 11 to 15, characterized in that it is impregnated with an aqueous or organic solvent.

17. Electrochemical generator having in a tight envelope (1, 3) a negative active electrode material (9) and a positive active electrode material (8) in contact with an electrolyte, characterized in that the positive active material (8) is formed by a polyaniline film according to any one of the claims 11 to 16.

18. Electrochemical generator according to claim 17, characterized in that the negative active material (9) is in the form of a film of lithium or an alloy of lithium and aluminium.

19. Electrochemical generator according to claim 18, characterized in that it is in the form of a possibly wound or folded film (16, 27, 29).

20. Electrochemical generator according to any one of the claims 17 to 19, characterized in that the negative and positive active materials are separated from one another by a film-type separator (5) impregnated with said electrolyte.

21. Electrochemical generator according to any one of the claims 17 to 20, characterized in that it is in the form of a credit card.

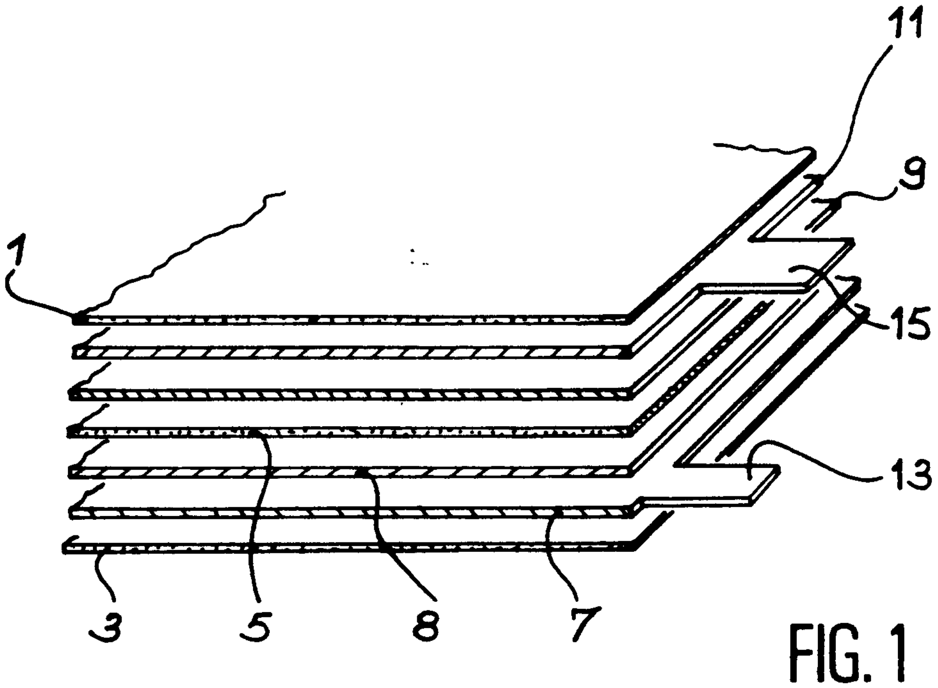


FIG. 1

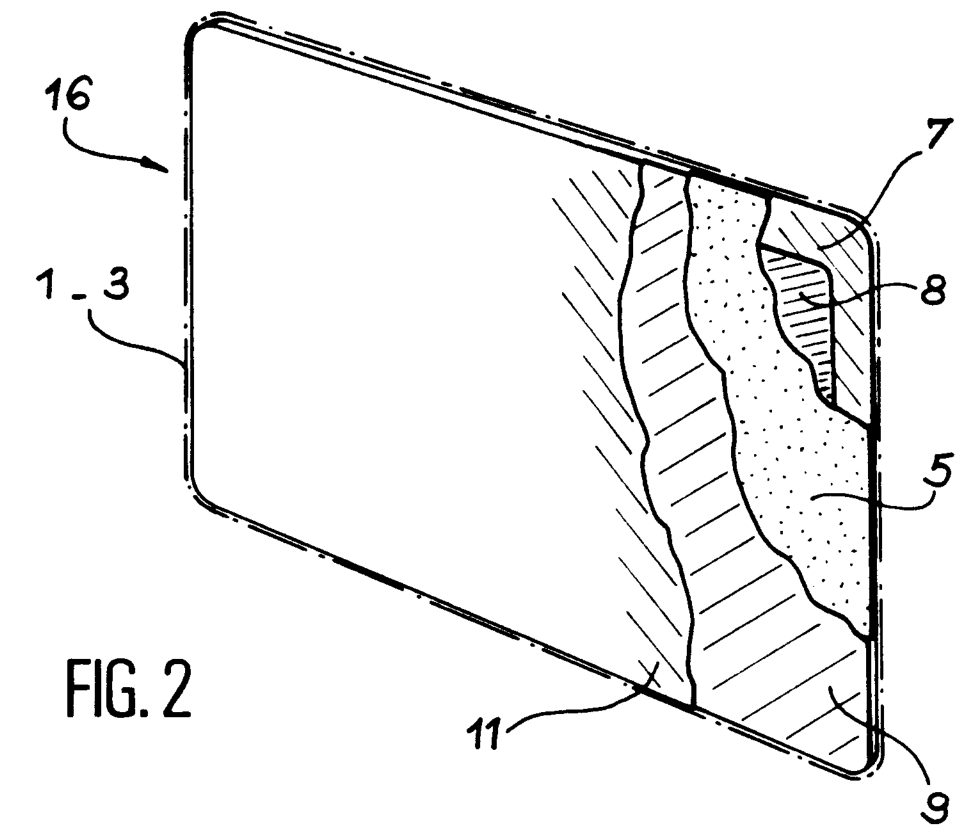


FIG. 2

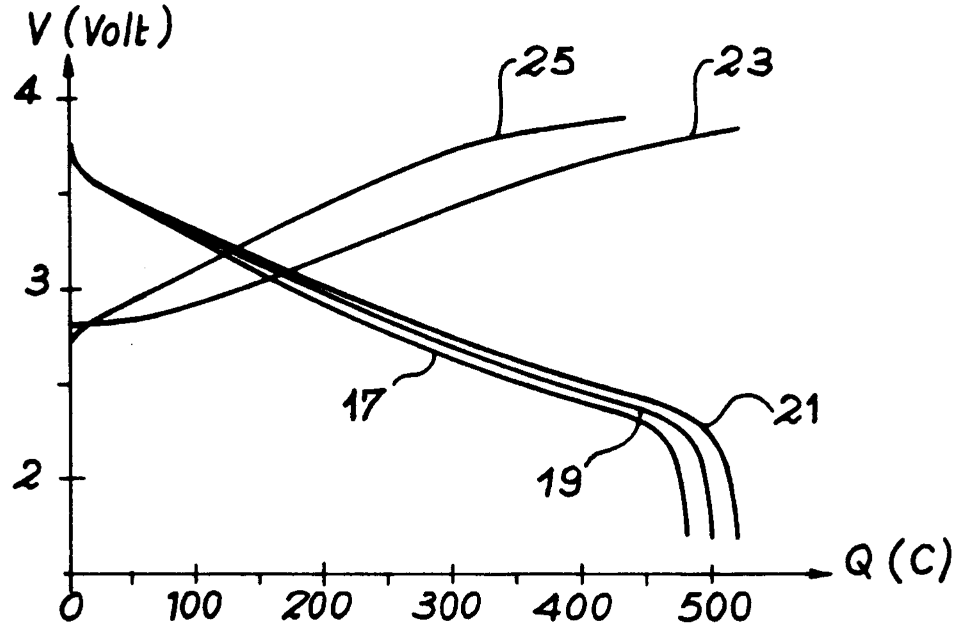


FIG. 3

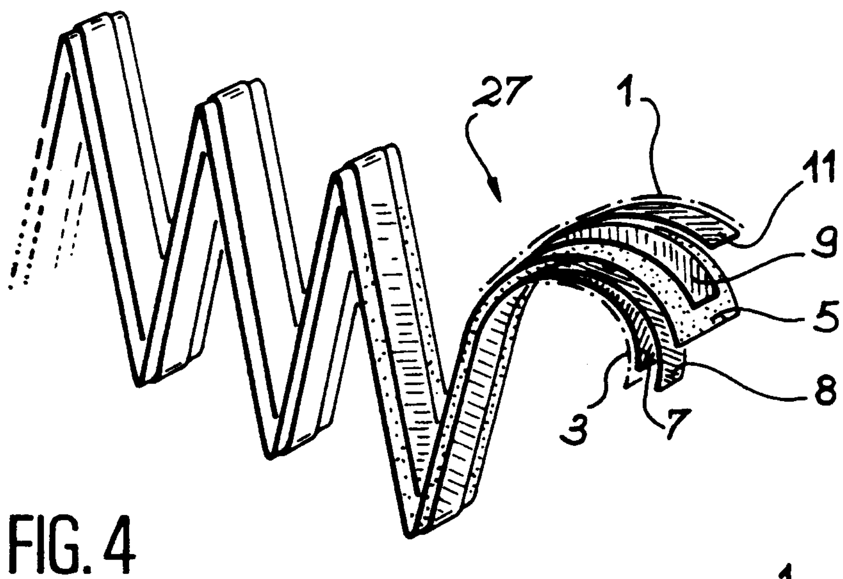


FIG. 4

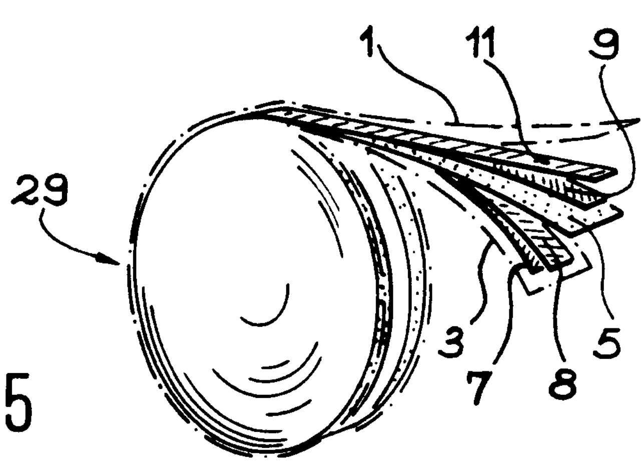


FIG. 5